# EUROPÄISCHE PATENTSCHRIFT

(11) **EP 1 482 518 B1**
(45) Veröffentlichungstag und Bekanntmachung des Hinweises auf die Patenterteilung: **13.06.2007**
(21) Anmeldenummer: 04009364.3
(22) Anmeldetag: 21.04.2004
(51) Int. Cl.: G21C 17/003, G21C 17/013

(54) **Einrichtung zum Bergen von unter Wasser befindlichen Fremdteilen**
Device for salvage of foreign matter being under water
Dispositif pour renflouage des corps étrangers présents sous l'eau

(30) Priorität: 21.05.2003 DE 10322931
(43) Veröffentlichungstag der Anmeldung: 01.12.2004
(73) Patentinhaber: AREVA NP GmbH, 91058 Erlangen (DE)
(72) Erfinder: Staudigel, Robert, 91315 Höchstadt (DE); Bischoff, Bernd, 91334 Hemhofen (DE)
(74) Vertreter: Mörtel & Höfner

(56) Entgegenhaltungen:
- EP-A- 0 197 020
- WO-A-01/32503
- FR-A- 2 624 422
- US-A- 4 569 230
- US-A- 4 883 576

## Beschreibung

Die Erfindung bezieht sich auf eine Einrichtung zum Bergen von unter Wasser befindlichen Fremdteilen im Primärkreislauf eines Kernkraftwerkes.

Im Rahmen von Wartungs- und Reparaturarbeiten im Primärkreislauf eines Kernkraftwerkes kann es geschehen, dass Teile freigesetzt werden, die entweder bei der Bearbeitung entstehen oder unbeabsichtigt beim Hantieren mit Inspektions- und Wartungseinrichtungen verloren gehen. Solche Fremdteile im Primärkreislauf eines Kernkraftwerkes können in ungünstigen Fällen den sicheren Betrieb des Kernkraftwerkes gefährden und müssen unter allen Umständen geborgen werden. In einer Vielzahl von Fällen befinden sich jedoch diese Fremdteile an schwer zugänglichen Stellen, die mit herkömmlichen mechanischen Bergwerkzeugen oder Bergemanipulatoren nicht oder nur unter Zuhilfenahme aufwendiger Sonderkonstruktionen geborgen werden können.

Der Erfindung liegt nun die Aufgabe zu Grunde eine Einrichtung zum Bergen eines Fremdteiles im Primärkreislauf eines Kernkraftwerkes anzugeben, die eine Bergung kleiner Fremdteile auch an schwer zugänglichen Stellen möglich macht.

Die genannte Aufgabe wird gemäß der Erfindung gelöst mit einer Einrichtung zum Bergen von unter Wasser befindlichen Fremdteilen mit den Merkmalen des Patentanspruches 1. Durch die Verwendung eines fernsteuerbaren und freien manövrierbaren Unterwasserfahrzeuges, das eine Unterwasserkamera sowie eine Beleuchtungseinrichtung trägt, und an dem eine Saugeinrichtung mit einer Saugpumpe angeordnet ist, an die über eine Filtereinheit ein Saugrohr angeschlossen ist, können Fremdteile auch an schwer zugänglichen Stellen sowohl entdeckt als auch daraus geborgen werden.

Weitere vorteilhafte Ausgestaltungen der Erfindung ergeben sich gemäß der Unteransprüche.

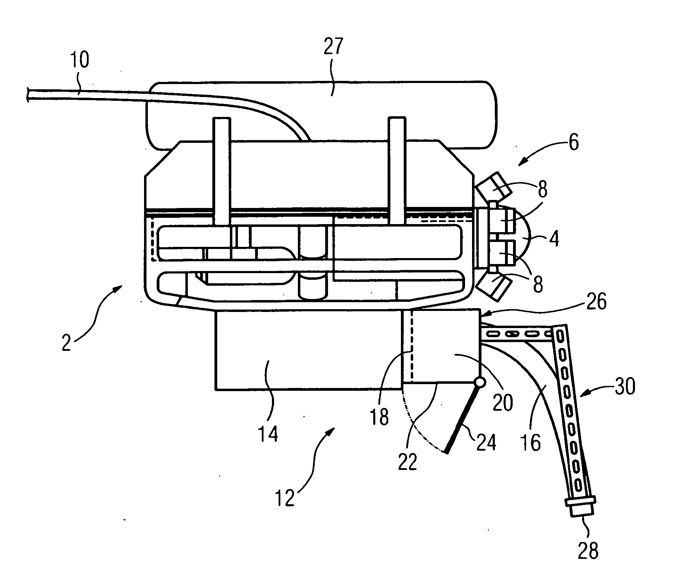

Zur weiteren Erläuterung der Erfindung wird auf das Ausführungsbeispiel der Zeichnung verwiesen, in deren einziger Figur eine Einrichtung gemäß der Erfindung in einer Seitenansicht schematisch dargestellt ist.

Gemäß der Figur umfasst die Einrichtung ein fernsteuerbares Unterwasserfahrzeug 2, wie es beispielsweise unter dem Handelsnamen "SUSI" der Framatome ANP GmbH bekannt ist. Das Unterwasserfahrzeug 2 enthält die zu seiner freien Manövrierbarkeit erforderlichen und in der Figur nicht im einzelnen dargestellten Antriebsaggregate. An seiner Vorderseite ist eine Unterwasserkamera 4, im Beispiel eine Schwenk-Neigekamera, angeordnet, die von einer Beleuchtungseinrichtung 6 umgeben ist, die eine Mehrzahl von Lichtquellen 8 enthält. Schematisch angedeutet ist eine Versorgungsleitung 10, die die zur elektrischen Versorgung und Steuerung des Unterwasserfahrzeuges und der daran angeordneten Komponenten sowie die zur Übermittlung der Videobilder erforderlichen Leitungen enthält.

Gemäß der Erfindung ist an der Unterseite des Unterwasserfahrzeuges 2 eine Saugeinrichtung 12 angeordnet. Diese umfasst eine Saugpumpe 14, an die ein Saugrohr angeschlossen ist. Zwischen Saugpumpe 14 und Saugrohr 16 ist ein gestrichelt angedeutetes, auswechselbares Filter 18 angeordnet, das verhindert, dass angesaugte Fremdteile in die Saugpumpe gelangen.

Zwischen Filter 18 und Saugrohr 16 befindet sich ein Auffangraum 20, der mit einer Entleerungsöffnung 22 versehen ist, die ferngesteuert, im Beispiel mit einer in der Figur geöffnet dargestellten schwenkbaren Öffnungsklappe 24, geöffnet und verschlossen werden kann. Im Ausführungsbeispiel sind Filter 18 und Auffangraum 20 in einem gemeinsamen Filterbehälter 26 zusammengefasst.

Auf der Oberseite des Unterwasserfahrzeuges 2 sind Zusatzschwimmkörper 27 angeordnet, die zur Kompensation des durch die Saugeinrichtung erhöhten Eigengewichtes und damit zum Erleichtern des Einhaltens einer stabilen Schwebeposition dienen.

Als Saugrohr 16 dient ein flexibler Wellschlauch aus Edelstahl, dessen freies Ende 28 lagefixiert in einer Halterung 30 gelagert ist, die aus verstellbaren, seitlich am Saugrohr angeordneten Schienen, im Ausführungsbeispiel miteinander verschraubte Lochblechstreifen, aufgebaut ist.

Nach Absaugen der Fremdteile, bei denen es sich um Teile in der Größenordnung einer Schraube M20x80 handeln kann, kann das Unterwasserfahrzeug 2 zu einem ebenfalls unter Wasser befindlichen Aufnahmebehälter gefahren werden und die geborgenen Fremdteile durch Öffnen der Entleerungsöffnung 22 in den Auffangbehälter übergeben.

### Bezugszeichenliste

- 2: Unterwasserfahrzeug
- 4: Unterwasserkamera,
- 6: Beleuchtungseinrichtung
- 8: Lichtquellen
- 10: Versorgungsleitung
- 12: Saugeinrichtung
- 14: Saugpumpe
- 16: Saugrohr
- 18: Filter
- 20: Auffangraum
- 22: Entleerungsöffnung
- 24: Öffnungsklappe
- 26: Filterbehälter
- 27: Zusatzschwimmkörper
- 28: freies Ende
- 30: Halterung

## Patentansprüche

1. Einrichtung zum Bergen von unter Wasser befindlichen Fremdteilen im Primärkreislauf eines Kernkraftwerkes, mit einem fernsteuerbaren und frei manövrierbaren Unterwasserfahrzeug (2), das eine Unterwasserkamera (4) sowie eine Beleuchtungseinrichtung (6) trägt, und an dem eine Saugeinrichtung (12) mit einer Saugpumpe (14) angeordnet ist, an die ein Saugrohr (16) angeschlossen ist.

2. Einrichtung nach Anspruch 1, mit einem zwischen Saugpumpe (14) und Saugrohr (16) angeordneten Filter (18).

3. Einrichtung nach Anspruch 2, mit einem zwischen Filter (18) und Saugrohr (16) befindlichen Auffangraum (20) für die Fremdteile.

4. Einrichtung nach Anspruch 3, mit einem Filterbehälter (26) zur Aufnahme des Filters (18), der zugleich als Auffangraum (20) dient.

5. Einrichtung nach Anspruch 3 oder 4, bei der der Auffangraum (20) mit einer Entleerungsöffnung (22) versehen ist, die ferngesteuert geöffnet und verschlossen werden kann.

6. Einrichtung nach einem der vorhergehenden Ansprüche, bei der als Saugrohr (16) ein flexibler Schlauch vorgesehen ist.

7. Einrichtung nach Anspruch 6, bei der das freie Ende (28) des Saugrohrs (16) lagefixiert in einer Halterung (30) gelagert ist.

## Claims

1. Device for salvaging foreign matter located under water in the primary circuit of a nuclear power station, having a remote controlled and freely manoeuvrable underwater vehicle (2) which carries an underwater camera (4) and an illumination device (6), and on which there is arranged a suction device (12) with a suction pump (14) to which a suction pipe (16) is connected.

2. Device according to Claim 1, having a filter (18) arranged between the suction pump (14) and suction pipe (16).

3. Device according to Claim 2, having a collecting space (20) for the foreign matter which is located between the filter (18) and suction pipe (16).

4. Device according to Claim 3, having a filter vessel (26) for holding the filter (18) and which serves simultaneously as collecting space (20).

5. Device according to Claim 3 or 4, in which the collecting space (20) is provided with an evacuation opening (22) which can be opened and closed under remote control.

6. Device according to one of the preceding claims, in which a flexible hose is provided as suction pipe (16).

7. Device according to Claim 6, in which the free end (28) of the suction pipe (16) is supported in a fixed position in a holder (30).

## Revendications

1. Dispositif de renflouage de corps étrangers se trouvant sous l'eau dans le circuit primaire d'une centrale nucléaire, comprenant un véhicule (2) sous-marin qui peut être télécommandé, qui peut être manoeuvré librement et qui porte une caméra (4) sous-marine ainsi qu'un dispositif (6) d'éclairage et sur lequel est monté un dispositif (12) d'aspiration ayant une pompe (14) d'aspiration, auquel est raccordé un tuyau (16) d'aspiration.

2. Dispositif suivant la revendication 1, comprenant un filtre (18) disposé entre la pompe (14) d'aspiration et le tuyau (16) d'aspiration.

3. Dispositif suivant la revendication 2, comprenant une chambre (20) de captage des corps étrangers se trouvant entre le filtre (18) et le tuyau (16) d'aspiration.

4. Dispositif suivant la revendication 3, comprenant une cuve (16) de réception du filtre (18) qui sert en même temps de chambre (20) de captage.

5. Dispositif suivant la revendication 3 ou 4, dans lequel la chambre (20) de captage est munie d'une ouverture (22) de vidange, qui peut être ouverte et fermée de façon télécommandée.

6. Dispositif suivant l'une des revendications précédentes, dans lequel il est prévu un conduit souple comme tuyau (16) d'aspiration.

7. Dispositif suivant la revendication 6, dans lequel l'extrémité (28) libre du tuyau (16) d'aspiration est montée en étant immobilisée en position dans une fixation (30).
